(19) Europäisches Patentamt
European Patent Office
Office européen des brevets

(11) **EP 4 184 992 A1**

(12) **EUROPEAN PATENT APPLICATION**
published in accordance with Art. 153(4) EPC

(43) Date of publication:
**24.05.2023 Bulletin 2023/21**

(21) Application number: **20945845.4**

(22) Date of filing: **20.07.2020**

(51) International Patent Classification (IPC):
*H04W 24/08* (2009.01)

(52) Cooperative Patent Classification (CPC):
**H04W 24/08**

(86) International application number:
**PCT/CN2020/103106**

(87) International publication number:
**WO 2022/016337 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **FU, Ting**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **COMMUNICATION METHOD, USER EQUIPMENT, BASE STATION DEVICE, AND COMPUTER STORAGE MEDIUM**

(57)   A communication method, a user equipment, a base station device, and a computer storage medium, relate to the technical field of wireless communications. The communication method includes: obtaining (S210) a first parameter in response to being in an idle state; and monitoring (S220) a Tracking Reference Signal (TRS) sequence and/or a Channel State Information Reference Signal (CSI-RS) sequence based on the first parameter.

```
┌─────────────────────────────────────────────────────────────┐
│ obtaining a first parameter in response to being in an idle state │  S210
└─────────────────────────────────────────────────────────────┘
                              │
                              ▼
┌─────────────────────────────────────────────────────────────┐
│ monitoring a TRS sequence and/or a CSI-RS sequence based on   │  S220
│                   the first parameter                         │
└─────────────────────────────────────────────────────────────┘
```

FIG. 2

EP 4 184 992 A1

**Description**

## TECHNICAL FIELD

The disclosure relates to the field of wireless communication technologies, and provides a communication method, a user equipment, a base station, and a computer storage medium.

## BACKGROUND

In a 5G New Radio (NR) communication system, the Channel State Information Reference Signal (CSI-RS) is used for various purposes, such as time-frequency tracking, CSI (Channel State Information) measurement and calculation, measurement and calculation of Layer 1 Reference Signal Received Power (L1-RSRP), and measurement for mobility management. The CSI-RS sequence is calculated according to the following expression as specified in the TS 38.211 protocol.

The CSI-RS sequence $r(m)$ is defined as:

$$r(m) = \frac{1}{\sqrt{2}}\left(1 - 2 * c(2m)\right) + j\frac{1}{\sqrt{2}}\left(1 - 2 * c(2m + 1)\right)$$

Where, the pseudo-random sequence $c(i)$ is defined in Section 5.2.1 of the TS 38.211 protocol, and the pseudo-random sequence generator is initialized at the beginning of each Orthogonal Frequency Division Multiplexing (OFDM) symbol as:

$$c_{\text{init}} = \left(2^{10}\left(N_{\text{symb}}^{\text{slot}}n_{\text{s,f}}^{\mu} + l + 1\right)(2n_{\text{ID}} + 1) + n_{\text{ID}}\right)\text{mod}2^{31}$$

where $n_{\text{s,f}}^{\mu}$ is an index number of a slot in a radio frame, $l$ is an index number of an OFDM symbol in a slot, and $n_{\text{ID}}$ is configured based on a parameter *scramblingID* (scrambling identifier) or *sequenceGenerationConfig* (sequence generation configuration) of a Radio Resource Control (RRC) layer, which is an integer ranging from 0 to 1023.

Since the parameter *scramblingID* or *sequenceGenerationConfig* of the RRC layer is configured by a base station to a User Equipment (UE) after the UE enters a RRC connected state, the UE does not have the RRC layer parameter configuration when the UE is in the RRC idle state, so the UE cannot obtain the parameter $n_{\text{ID}}$ required for monitoring a Tracking Reference Signal (TRS) sequence and/or a CSI-RS sequence. The TRS sequence is a combination of CSI-RS in multiple CSI-RS configurations, which is essentially a CSI-RS.

## SUMMARY

The disclosure aims to solve at least one of the technical defects described above, and the following technical solution is proposed.

According to an aspect, a communication method is provided. The method includes:

obtaining a first parameter in response to being in an idle state; and
monitoring a Tracking Reference Signal TRS sequence and/or a Channel State Information Reference Signal CSI-RS sequence based on the first parameter.

In a possible implementation, obtaining the first parameter in response to being in an idle state includes at least one of:

obtaining a preset first parameter;
receiving the first parameter sent by a base station; or
determining the first parameter based on a second parameter and an association relation between the first parameter and the second parameter, in which the second parameter is a parameter related to a Paging Occasion (PO) monitored by a User Equipment UE.

In a possible implementation, the parameter related to the PO monitored by the UE includes at least one of:

a physical layer cell identifier of a cell of the PO monitored by the UE; an index of a radio frame of the PO monitored by the UE; an index of a time slot of the PO monitored by the UE; an index of a start symbol of the PO monitored by the UE; or, an index of a Synchronization Signal Block (SSB) corresponding to the PO monitored by the UE.

In a possible implementation, receiving the first parameter sent by the base station includes:

receiving system information sent by the base station, in which the system information includes the first parameter; the system information includes a Master Information Block (MIB) or a System Information Block (SIB).

In a possible implementation, monitoring the TRS sequence and/or the CSI-RS sequence based on the first parameter includes at least one of:

monitoring the TRS sequence and/or the CSI-RS sequence based on the first parameter in response to being in the idle state; or
monitoring the TRS sequence and/or the CSI-RS sequence based on the first parameter in response to being in a connected state.

In a possible implementation, the first parameter is an integer ranging from 0 to 1023.
In a possible implementation, the first parameter is a scrambling identifier for generating the TRS sequence and/or the CSI-RS sequence.
According to an aspect, a communication method is provided. The method includes:
sending a first parameter, in which the first parameter is configured for a UE to monitor a TRS sequence and/or a CSI-RS sequence.
In a possible implementation, sending the first parameter includes:
sending system information, in which the system information includes the first parameter;
the system information includes a MIB or a SIB.
In a possible implementation, the first parameter is an integer ranging from 0 to 1023.
In a possible implementation, the first parameter is a scrambling identifier for generating the TRS sequence and/or the CSI-RS sequence.
According to an aspect, a user equipment UE is provided. The UE includes:

an obtaining module, configured to obtain a first parameter in response to being in an idle state.
a monitoring module, configured to monitor a TRS sequence and/or a CSI-RS sequence based on the first parameter.

In a possible implementation, the obtaining module is configured to perform at least one of:

obtaining a preset first parameter;
receiving the first parameter sent by a base station; or
determining the first parameter based on a second parameter and an association relation between the first parameter and the second parameter, in which the second parameter is a parameter related to a PO monitored by the UE.

In a possible implementation, the parameter related to the PO monitored by the UE includes at least one of:
a physical layer cell identifier of a cell of the PO monitored by the UE; an index of a radio frame of the PO monitored by the UE; an index of a slot of the PO monitored by the UE; an index of a start symbol of the PO monitored by the UE; or, an index of a SSB corresponding to the PO monitored by the UE.
In a possible implementation, when receiving the first parameter sent by a base station, the obtaining module is configured to:

receive system information sent by the base station, in which the system information includes the first parameter; the system information includes a MIB or a SIB.

In a possible implementation, the monitoring module is configured to perform at least one of:

monitoring the TRS sequence and/or the CSI-RS sequence based on the first parameter in response to being in the idle state; or
monitoring the TRS sequence and/or the CSI-RS sequence based on the first parameter in response to being in a connected state.

In a possible implementation, the first parameter is an integer ranging from 0 to 1023.

In a possible implementation, the first parameter is a scrambling identifier for generating the TRS sequence and/or the CSI-RS sequence.

According to an aspect, a base station is provided. The base station includes:

a sending module, configured to send a first parameter, in which the first parameter is configured for a UE to monitor a TRS sequence and/or a CSI-RS sequence.

In a possible implementation, when sending the first parameter, the sending module is configured to:

send system information, in which the system information includes the first parameter;
the system information includes a MIB or a SIB.

In a possible implementation, the first parameter is an integer ranging from 0 to 1023.

In a possible implementation, the first parameter is a scrambling identifier for generating the TRS sequence and/or the CSI-RS sequence.

According to an aspect, an electronic device including a memory, a processor and computer programs stored on the memory and executable by the processor is provided. When the computer programs are executed by the processor, the above communication method is implemented.

According to an aspect, a computer readable storage medium having computer programs stored thereon is provided. When the computer programs are executed by a processor, the above communication method is implemented.

According to the communication method of the embodiments of the disclosure, the UE can obtain the first parameter used for monitoring the TRS sequence and/or the CSI-RS sequence when the UE is in the idle state, so that the TRS sequence and/or the CSI-RS sequence can be monitored based on the obtained first parameter, and then it is determined whether to monitor Paging Downlink Control Information (DCI) in the PO and its corresponding Physical Downlink Shared channel (PDSCH) based on a monitoring result of the TRS sequence and/or the CSI-RS sequence.

Additional aspects and advantages of the embodiments of the disclosure will be given in part in the following descriptions, become apparent from the following descriptions, or be learned from the practice of the embodiments of the disclosure.

## BRIEF DESCRIPTION OF THE DRAWINGS

These and other aspects and advantages of the embodiments of the disclosure will become apparent and more readily appreciated from the following descriptions made with reference to the accompanying drawings, in which:

FIG. 1 is a schematic diagram of a wireless communication system according to an embodiment of the disclosure.
FIG. 2 is a flowchart of a communication method according to an embodiment of the disclosure.
FIG. 3 is a flowchart of a communication method according to another embodiment of the disclosure.
FIG. 4 is a block diagram of a UE according to another embodiment of the disclosure.
FIG. 5 is a block diagram of a base station according to another embodiment of the disclosure.
FIG. 6 is a schematic diagram of an electronic device according to another embodiment of the disclosure.

## DETAILED DESCRIPTION

Embodiments of the disclosure are described in detail below, and examples of the embodiments are shown in the accompanying drawings, in which the same or similar numbers indicate the same or similar components or components having the same or similar function. The embodiments described below with reference to the accompanying drawings are exemplary and are intended only to explain the disclosure and are not to be used for limiting the disclosure.

It should be understood that, unless the context clearly indicates otherwise, the singular forms "a", "one", "said" and "the" used herein may also include the plural forms. It should be further understood that the term "includes" as used in this disclosure refers to the presence of the described features, integers, steps, operations, components and/or assemblies, but does not exclude the presence or addition of one or more other features, integers, steps, operations, components, assemblies and/or groups thereof. It should be understood that when the component is "connected" or "coupled" to another component, it may be directly connected or coupled to other components, or there may be an intermediate component. In addition, "connected" or "coupled" as used herein may include wirelessly connected or wirelessly coupled. The term "and/or" includes all or any of the units and all combinations of one or more of the associated listed items.

In the current discussion of energy saving when the UE is in an RRC (radio resource control) idle state, one important research direction is to use the TRS (Tracking Reference Signal) sequence and/or the CSI-RS (Channel State Information Reference Signal) sequence originally used in the RRC connected state as an energy saving indication signal when the UE is in the RRC idle state. For example, a base station can send the TRS sequence and/or the CSI-RS sequence before a periodic PO. (1) If the UE detects the TRS sequence and/or CSI-RS sequence before a certain PO, the UE believes that there is paging DCI (downlink control information) to be monitored in the next PO. At this time, the UE may try to monitor the paging DCI in the PO and its corresponding PDSCH. (2) If the UE does not detect the TRS sequence and/or the CSI-RS sequence before a certain PO, the UE believes that there is no paging DCI to be monitored in the next PO, and the UE does not try to monitor the paging DCI in the PO or its corresponding PDSCH.

In this way, by monitoring the TRS sequence and/or the CSI-RS sequence by the UE, unnecessary PO monitoring can be avoided and the effect of energy saving of the UE can be achieved. Meanwhile, by sending the TRS sequence and/or the CSI-RS sequence before the PO, the UE can quickly perform a downlink synchronization with the base station, to better receive the paging DCI and its corresponding PDSCH.

In the existing protocol, the generation of CSI-RS sequence is related to a parameter $n_{ID}$ , which is determined based on the parameter *scramblingID* or *sequenceGenerationConfig* of the RRC layer, and $n_{ID}$ is an integer ranging from 0 to 1023. Generally, the parameter *scramblingID* or *sequenceGenerationConfig* of the RRC layer is configured by the base station to the UE after the UE enters the RRC connected state. However, when the UE monitors the PO, the UE is still in the RRC idle state. At this time, the UE does not have the parameter configuration information of the RRC layer, thus the parameter $n_{ID}$ that is needed for monitoring the TRS sequence and/or the CSI-RS sequence is not available.

On the basis, the embodiments of the disclosure provide a method to make the UE obtain the parameter $n_{ID}$ used for monitoring the TRS sequence and/or the CSI-RS sequence even in the idle state, so that the TRS sequence and/or the CSI-RS sequence can be monitored according to the parameter $n_{ID}$.

In order to make the purpose, technical solutions and advantages of the embodiments of the disclosure clearer, the embodiments of the disclosure are described in detail below with reference to the accompanying drawings.

The technical solution of the embodiments of the disclosure and how to solve the technical problems described above based on the technical solution of the embodiments of the disclosure are described in detail below with specific embodiments. The following specific embodiments may be combined with each other, and the same or similar concepts or processes may not be repeated in some embodiments. The embodiments of the disclosure will be described below in combination with the accompanying drawings.

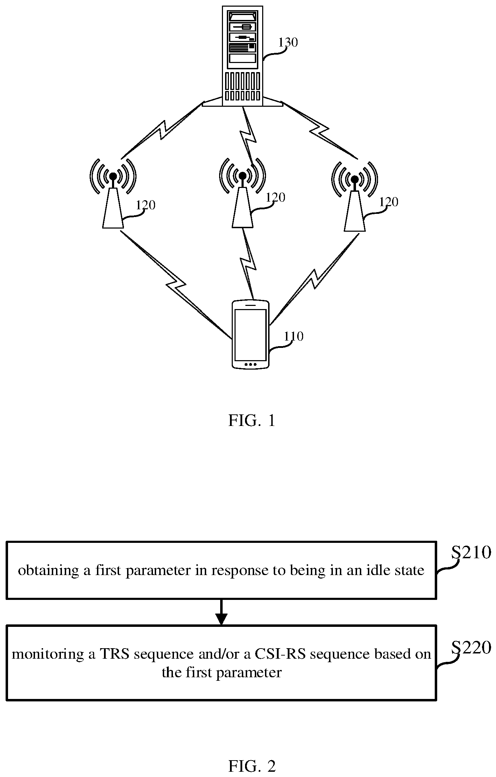

FIG. 1 is a schematic diagram of a wireless communication system according to an embodiment of the disclosure. As shown in FIG. 1, the wireless communication system may include: a plurality of user equipments (UEs) 110 and a plurality of base stations 120.

The UE 110 may communicate with one or more core networks via a Radio Access Network (RAN). The UE 110 may be a device that provides voice and/or data connectivity to a user, such as a smartphone, a tablet computer, and a smartwatch. The UE 110 may be an Internet of Things (IoT) device, such as a sensor device, a mobile phone (or "cellular" phone) and a computer with an IoT terminal. The UE 110 may be a fixed, portable, pocket, hand-held, built-in computer or a vehicle-mounted device, such as, a mobile station, a mobile, a remote station, an access point, a remote terminal, and an access terminal, which is not limited in the disclosure.

The base station 120 may be a network side device in the wireless communication system. The wireless communication system may be a 5G (fifth generation mobile communication) system, also known as a New Radio (NR) system. Alternatively, the wireless communication system may be a next generation system of the 5G system.

The base station 120 may be a base station (gNB) that adopts a centralized and distributed architecture in the 5G system. When the base station 120 adopts the centralized and distributed architecture, it generally includes a Central Unit (CU) and at least two Distributed Units (DUs). The CU is provided with protocol stacks of a Packet Data Convergence Protocol (PDCP) layer, a Radio Link Control (RLC) layer, and a Media Access Control (MAC) layer. A physical (PHY) layer protocol stack is set in the DU. The specific implementation manner of the base station 120 is not limited in the embodiments of the disclosure.

A wireless connection can be established between the base station 120 and the UE 110 through a radio interface. In different embodiments, the radio interface is a radio interface based on the 5G standard, such as, a NR. Alternatively, the radio interface may also be a radio interface based on a next generation of the 5G standard.

In addition, the above wireless communication system may also include a network management device 130. The plurality of the base stations 120 are connected to the network management device 130 respectively. The network management device 130 may be a core network device in the wireless communication system. For example, the network management device 130 may be a Mobility Management Entity (MME) in an Evolved Packet Core (EPC). Certainly, the network management device may also be other core network devices, which is not limited by the embodiments of the disclosure.

The embodiment of the disclosure provides a communication method applied in the wireless communication system shown in FIG. 1 and performed by the UE 110 in FIG. 1. As shown in FIG. 2, the method includes the following steps. At step S210, the first parameter is obtained in response to when in an idle state. At step S220, a TRS sequence and/or a CSI-RS sequence is monitored based on the first parameter.

The UE can obtain the first parameter when the UE is in an RRC idle state. The first parameter is used for the UE to monitor the TRS sequence and/or the CSI-RS sequence in the RRC idle state. After obtaining the first parameter in the RRC idle state, the UE can demodulate the TRS sequence and/or the CSI-RS sequence based on the first parameter, so as to monitor the TRS sequence and/or the CSI-RS sequence, so that the corresponding subsequent operation can be executed according to a monitoring result of the TRS sequence and/or the CSI-RS sequence. That is, the UE monitors the TRS sequence and/or the CSI-RS sequence according to the first parameter.

In an example, the UE may be considered to have monitored (or detected) the TRS sequence and/or the CSI-RS sequence if the UE is able to correctly demodulate the TRS sequence and/or the CSI-RS sequence based on the obtained first parameter in the RRC idle state. If the UE fails to correctly demodulate the TRS sequence and/or the CSI-RS sequence based on the obtained first parameter in the RRC idle state, it may be determined that the UE fails to monitor (or detect) the TRS sequence and/or the CSI-RS sequence.

In the process of performing the corresponding subsequent operation based on the monitoring result of the RS sequence and/or the CSI-RS sequence, if the UE monitors (or detects) the TRS sequence and/or the CSI-RS sequence in the RRC idle state, the UE determines that there is paging DCI (downlink control information) to be monitored in the next PO. At this time, the UE tries to monitor the paging DCI in the PO and its corresponding PDSCH. If the UE does not monitor (or detect) the TRS sequence and/or the CSI-RS sequence in the RRC idle state, the UE determines that there is no paging DCI to be monitored in the next PO. At this time, the UE does not try to monitor the paging DCI in the PO and its corresponding PDSCH.

In one example, the first parameter may be the parameter $n_{ID}$ that is needed for monitoring the TRS sequence and/or the CSI-RS sequence. The parameter $n_{ID}$ is configured to the UE by the base station via the parameter *scramblingID* or *sequenceGenerationConfig* of the RRC layer after the UE enters the RRC connected state, i.e., the UE cannot obtain the parameter $n_{ID}$ in the RRC idle state. The method of the disclosure enables the UE in the idle state to obtain the first parameter (e.g., $n_{ID}$), which is only available when the UE is in the RRC connected state, so that the UE can accurately monitor the TRS sequence and/or the CSI-RS sequence based on the obtained first parameter (e.g., $n_{ID}$) even when the UE is in the idle state.

The communication method of the embodiments of the disclosure enables the UE in the idle state to obtain the first parameter needed for monitoring the TRS sequence and/or the CSI-RS sequence, so that the UE can monitor the TRS sequence and/or the CSI-RS sequence based on the obtained first parameter, and then the UE can determine whether to try to monitor the paging DCI in the PO and its corresponding PDSCH based on the monitoring result of the TRS sequence and/or the CSI-RS sequence.

In an optional implementation, obtaining the first parameter when in the idle state includes at least one of:

obtaining a preset first parameter;
receiving the first parameter sent by a base station; or
determining the first parameter based on a second parameter and an association relation between the first parameter and the second parameter, in which the second parameter is a parameter related to a PO monitored by the UE.

For mode 1, in a case that the UE is in the idle state, the first parameter is set to a certain value in a protocol agreement, i.e., a value of the first parameter when the UE is in the idle state is set in the protocol agreement, so that when the UE is in the idle state, the value of the first parameter can be read directly according to the protocol agreement, i.e., the first parameter can be obtained. That is, when in the idle state, the UE can obtain the first parameter by obtaining the preset first parameter. For example, the UE can directly read the preset first parameter when the UE is in the idle state.

After the UE obtains the first parameter according to the protocol agreement when the UE is in the idle state, the UE may use the first parameter to monitor the TRS sequence and/or the CSI-RS sequence sent before the PO by the base station. That is, the UE monitors the TRS sequence and/or the CSI-RS sequence sent before the PO by the base station when the UE is in the idle state based on the first parameter obtained when the UE is in the idle state.

For mode 2, the base station may send the first parameter to the UE to enable the UE to obtain the first parameter, i.e., the base station sends the first parameter. The first parameter is used by the UE to monitor the TRS sequence and/or the CSI-RS sequence. Correspondingly, the UE in the RRC idle state receives the first parameter sent by the base station. After the UE in the idle state receives the first parameter sent by the base station, the UE may monitor the TRS sequence and/or CSI-RS sequence sent before the PO by the base station based on the first parameter, i.e., the first parameter is used for monitoring the TRS sequence and/or the CSI-RS sequence sent before the PO by the base station.

It is noted that, similar to the case of mode 1, the UE may also use the first parameter received from the base station when it is in the idle state to monitor a TRS sequence and/or a CSI-RS sequence for channel estimation or time-frequency tracking received when the UE is in the RRC connected state.

For mode 3, in a case that the UE is in the idle state, the association relation between the first parameter and the second parameter can be agreed in the protocol agreement. The second parameter is a parameter related to the PO monitored by the UE. The second parameter can be a parameter related to the PO monitored by the UE that is obtained when the UE is in the idle state, or a parameter related to the PO monitored by the UE when the UE is in other states (e.g., an intermediate state), which is not limited by the embodiments of the disclosure.

On the basis, when the UE is in the idle state, the UE can obtain the association relation between the first parameter and the second parameter according to the protocol agreement. After obtaining the association relation, the UE in the idle state may determine the first parameter based on the second parameter and the association relation between the first parameter and the second parameter, so that the UE obtains the first parameter in the idle state, and then monitors the TRS sequence and/or the CSI-RS sequence sent before the PO by the base station based on the first parameter. That is, when the UE is in the idle state, the UE determines the first parameter based on the second parameter and the association relation between the first parameter and the second parameter, in which the second parameter is a parameter associated with the PO monitored by the UE.

It is noted that, similar to the case of mode 1 above, the UE may also use the first parameter determined based on the second parameter and the association relation between the first parameter and the second parameter when it is in the idle state, to monitor the TRS sequence and/or the CSI-RS sequence for the channel estimation or time-frequency tracking received when the UE is in the RRC connected state.

In an example, the parameter associated with the PO monitored by the UE may include at least one of: a physical layer cell identifier of a cell of the PO monitored by the UE; an index of a radio frame of the PO monitored by the UE; an index of a time slot of the PO monitored by the UE; an index of a start symbol of the PO monitored by the UE; or, an index of a SSB (Synchronization Signal Block) corresponding to the PO monitored by the UE. For example, it may be agreed in the protocol agreement that the first parameter set is equal to the physical layer cell identifier of the cell at which the PO monitored by the UE. Certainly, in addition to the above parameters associated with the PO, there can be other viable parameters associated with the PO, which are not limited by the embodiments of the disclosure.

The first parameter obtained in the above three modes may be an integer ranging from 0 to 1023, such as, 0, 1023, or any integer between 0 and 1023 (e.g., 5, 100 and 1021). The first parameter may be a scrambling identifier for generating the TRS sequence and/or the CSI-RS sequence, such as the parameter $n_{ID}$ needed for generating the TRS sequence and/or the CSI-RS sequence.

The UE may choose to use at least one of the above three modes in the process of obtaining the first parameter when the UE is in the idle state. At this time, the UE can dynamically choose to use the above-mentioned mode 1, mode 2 or mode 3 to obtain the first parameter by setting different priorities for the three modes respectively.

In an example, when the UE chooses to use the above-mentioned mode 1 and mode 2 when obtaining the first parameter in the idle state, but the priority of mode 1 is higher than that of mode 2, the UE can directly read the value of the first parameter according to the protocol agreement and monitors the TRS sequence and/or CSI-RS sequence sent before the PO by the base station when it is in the idle state based on the first parameter, which means that the first parameter sent by the base station when the UE is in the idle state can be ignored.

In an example, when the UE chooses to use the above-mentioned three modes when obtaining the first parameter in the idle state, but the priority of mode 2 is higher than that of mode 1 and the priority of mode 1 is higher than that of mode 3, the UE can receive the first parameter sent by the base station when it is in the idle state and monitors the TRS sequence and/or CSI-RS sequence before the PO sent by the base station when it is in the idle state based on the first parameter, that is, the first parameter read directly according to the protocol agreement (in mode 1) is ignored, and the first parameter determined according to the second parameter and the association relation between the first parameter and the second parameter is ignored.

In an optional embodiment, receiving the first parameter sent by the base station includes: receiving system information sent by the base station, in which the system information includes the first parameter.

When the base station sends the first parameter to the UE, it may send the first parameter to the UE by sending the system information to the UE. The system information includes the first parameter, i.e., the base station may send the system information carrying the first parameter to the UE. For example, the base station may broadcast the first parameter in the system information. Correspondingly, the UE in the RRC idle state receives the system information sent by the base station, in which the system information includes the first parameter. For example, the UE receives the first parameter sent by the base station by broadcasting the system information when the UE is in the idle state.

The above system information may be a MIB (Master Information Block) or a SIB (System Information Block), which is not limited in the embodiment of the disclosure. That is, the system information includes either the MIB or the SIB.

In an optional embodiment, monitoring the TRS sequence and/or the CSI-RS sequence based on the first parameter includes at least one of: monitoring the TRS sequence and/or the CSI-RS sequence based on the first parameter when in the idle state; or monitoring the TRS sequence and/or the CSI-RS sequence based on the first parameter when in a connected state.

The first parameter obtained by the UE in the idle state can be used by the UE in the idle state to monitor the TRS sequence and/or the CSI-RS sequence, or can be used by the UE in the connected state to monitor the TRS sequence and/or the CSI-RS sequence, which is not limited by the embodiments of the disclosure.

For the TRS sequence and/or CSI-RS sequence sent by the base station to the UE for the channel estimation or time-frequency tracking when the UE is in the RRC connected state, in one case, the UE may still use the method according to an existing protocol to obtain the first parameter, that is, the base station configures the first parameter for the UE via a RRC signaling when the UE is in the RRC connected state. For example, the base station sends the RRC signaling carrying the first parameter to the UE in the RRC connected state. Correspondingly, the UE in the RRC connected state receives the RRC signaling carrying the first parameter from the base station and monitors the received TRS sequence and/or CSI-RS sequence based on the first parameter. In another case, the UE may use the first parameter obtained when it is in the idle state to monitor the TRS sequence and/or the CSI-RS sequence received for the channel estimation or time-frequency tracking when it is in the RRC connected state. That is, the UE, in the idle state, may monitor the TRS sequence and/or the CSI-RS sequence based on the first parameter obtained when the UE is in the idle state, and the UE, in the connected state, may also monitor the TRS sequence and/or the CSI-RS sequence based on the first parameter obtained when the UE is in the idle state.

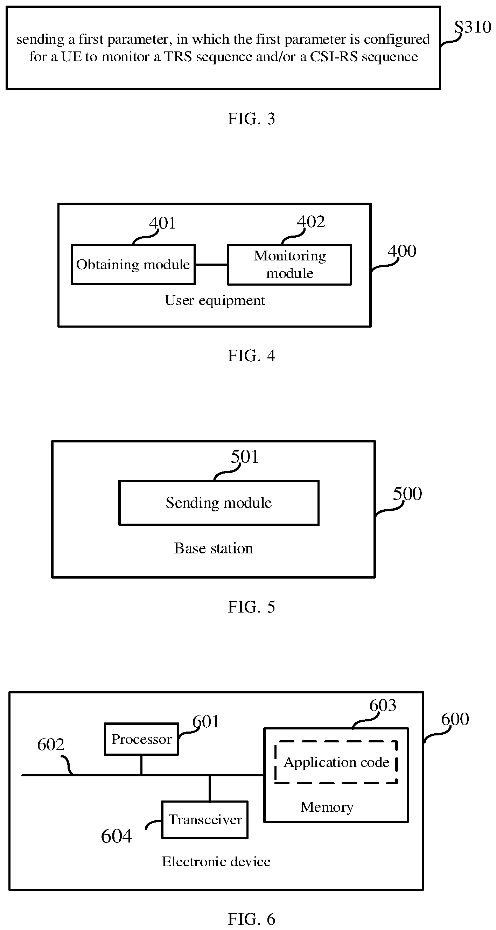

The embodiment of the disclosure further provides a communication method, applied in the wireless communication system shown in FIG. 1 and executed by the base station 120 in FIG. 1. As shown in FIG. 3, the method includes: step S310. At step S310, a first parameter is sent, first parameter is used for a UE to monitor a TRS sequence and/or a CSI-RS sequence.

In a possible implementation, sending the first parameter includes:

sending system information, in which the system information includes the first parameter;
the system information includes a MIB or a SIB.

In a possible implementation, the first parameter is an integer ranging from 0 to 1023.

In a possible implementation, the first parameter is a scrambling identifier for generating the TRS sequence and/or the CSI-RS sequence.

It should be noted that the communication method at the base station side provided in the embodiments of the disclosure corresponds to the communication method at the user equipment side provided in the embodiments of the disclosure. Therefore, it is understood that the processing steps of the communication method at the base station side correspond to the steps of the communication method at the user equipment side, and the processing steps of the communication method at the base station side will not be described herein repeatedly. The specific description of the corresponding steps of the communication method at the user equipment side can refer to the corresponding descriptions in the preceding paragraphs.

According to the communication method of the embodiment of the disclosure, the UE can obtain the first parameter needed for monitoring the TRS sequence and/or the CSI-RS sequence in the idle state, so that the UE can monitor the TRS sequence and/or the CSI-RS sequence based on the obtained first parameter, and then it is determined whether to try to monitor the paging DCI in the PO and its corresponding PDSCH based on the monitoring result of the TRS sequence and/or the CSI-RS sequence.

FIG. 4 is a block diagram of a UE according to an embodiment of the disclosure. As shown in FIG. 4, the UE 400 includes: an obtaining module 401 and a monitoring module 402.

The obtaining module 401 is configured to obtain a first parameter in response to being in an idle state.

The monitoring module 402 is configured to monitor a TRS sequence and/or a CSI-RS sequence based on the first parameter.

In a possible implementation, the obtaining module is configured to perform at least one of:

obtaining a preset first parameter;
receiving the first parameter sent by a base station; or
determining the first parameter based on a second parameter and an association relation between the first parameter and the second parameter, in which the second parameter is a parameter related to a PO monitored by the UE.

In a possible implementation, the parameter related to the PO monitored by the UE includes at least one of: a physical layer cell identifier of a cell of the PO monitored by the UE; an index of a radio frame at which the PO monitored by the UE; an index of a time slot at which the PO monitored by the UE; an index of a start symbol of the PO monitored by the UE; or an index of a SSB corresponding to the PO monitored by the UE.

In a possible implementation, when receiving the first parameter sent by a base station, the obtaining module is configured to:

receive system information sent by the base station, in which the system information includes the first parameter;
the system information includes a MIB or a SIB.

In a possible implementation, the monitoring module is configured to perform at least one of:

when in the idle state, monitoring the TRS sequence and/or the CSI-RS sequence based on the first parameter; or
when in a connected state, monitoring the TRS sequence and/or the CSI-RS sequence based on the first parameter.

In a possible implementation, the first parameter is an integer ranging from 0 to 1023.

In a possible implementation, the first parameter is a scrambling identifier for generating the TRS sequence and/or the CSI-RS sequence.

According to the user equipment of the embodiment of the disclosure, the UE can obtain the first parameter used for monitoring the TRS sequence and/or the CSI-RS sequence in the idle state, so that the TRS sequence and/or the CSI-RS sequence is monitored based on the obtained first parameter, and then it is determined whether to monitor the paging DCI in the PO and its corresponding PDSCH based on the monitoring result of the TRS sequence and/or the CSI-RS sequence.

It should be noted that, this embodiment is a device embodiment corresponding to the method embodiments at the UE side, and this embodiment can be implemented in coordination with the above method embodiments at the UE side. The relevant technical details mentioned in the above method embodiments at the UE side are still valid in this embodiment and will not be repeated here in order to reduce repetition. Accordingly, the relevant technical details mentioned in this embodiment can also be applied in the above method embodiments at the UE side.

FIG. 5 is a block diagram of a base station according to an embodiment of the disclosure. As shown in FIG. 5, the base station 500 includes: a sending module 501.

The sending module 501 is configured to send a first parameter, in which the first parameter is configured for a UE to monitor a TRS sequence and/or a CSI-RS sequence.

In a possible implementation, when sending the first parameter, the sending module is configured to:

send system information when the UE is in the idle state, in which the system information includes the first parameter; the system information includes a MIB or a SIB.

In a possible implementation, the first parameter is an integer ranging from 0 to 1023.

In a possible implementation, the first parameter is a scrambling identifier for generating the TRS sequence and/or the CSI-RS sequence.

With the base station of the embodiment of the disclosure, the UE can obtain the first parameter used for monitoring the TRS sequence and/or the CSI-RS sequence in the idle state, so that the TRS sequence and/or the CSI-RS sequence is monitored based on the obtained first parameter, and then it is determined whether to monitor the paging DCI in the PO and its corresponding PDSCH based on the monitoring result of the TRS sequence and/or the CSI-RS sequence.

It should be noted that this embodiment is a device embodiment corresponding to the method embodiments at the base station side, and this embodiment can be implemented in coordination with the above method embodiments at the base station side. The relevant technical details mentioned in the above method embodiments at the base station side are still valid in this embodiment and will not be repeated here in order to reduce repetition. Accordingly, the relevant technical details mentioned in this embodiment can also be applied in the above method embodiments at the base station side.

An electronic device is provided in another embodiment of the disclosure. As shown in FIG. 6, the electronic device 600 includes: a processor 601 and a memory 603. The processor 601 and the memory 603 are connected. For example, the processor 601 is connected to the memory 603 via a bus 602. Further, the electronic device 600 may also include a transceiver 604. It is noted that there is one or more transceivers 604 in practical application, and the structure of the electronic device 600 does not constitute a limitation of the embodiment of the disclosure.

The processor 601 is applied in the embodiments of the disclosure for implementing the functions of the obtaining module and the monitoring module shown in FIG. 4 or for implementing the function of the sending module shown in FIG. 5. The transceiver 604 includes a receiver and a transmitter.

The processor 601 may be a Central Processing Unit (CPU), a general processor, a Digital Signal Processor (DSP), an Application Specific Integrated Circuit (ASIC), a Field Programmable Gate Array (FPGA), or other programmable logic devices, transistor logic devices, hardware components or any combination thereof, which can implement or execute various exemplary logic boxes, modules or circuits described in the contents disclosed in the disclosure. The processor 601 may also be a combination used to implement a computing function, for example, a combination consisting of one or more microprocessors, and a combination consisting of a DSP and a microprocessor.

The bus 602 may include a link on which data can be transmitted between the above components. The bus 602 may be a Peripheral Component Interconnect (PCI) bus or an Extended Industry Standard Architecture (EISA) bus. The bus 602 may be divided into an address bus, a data bus, or a control bus. For ease of representation, only one thick line is used in FIG. 6 to represent the bus, but it does not indicate that there is only one bus or one type of bus.

The memory 603 may be, for example, a Read Only Memory (ROM) or other type of static storage device that can store static information and instructions, a Random Access Memory (RAM) or other type of dynamic storage device that can store information and instructions, an Electrically Erasable Programmable Read Only Memory (EEPROM), a Compact Disc Read Only Memory (CD-ROM) or other optical disc memories, optical disk memories (including compact disc, laser disc, optical disk, digital general disc, and Blu-ray disc), disk storage mediums or other magnetic storage devices, or any other medium that can be used to carry or store program codes in the form of instructions or data structures and can be accessed by a computer, which is not limited herein.

The memory 603 is configured to store application codes for executing the embodiments of the disclosure and is controlled for execution by the processor 601. The processor 601 is configured to execute the application codes stored in the memory 603, to implement the actions of the UE in the embodiment shown in FIG. 4 or to implement the actions of the base station in the embodiment shown in FIG. 5.

The embodiment of the disclosure provides an electronic device. The electronic device includes: a memory, a processor and computer programs stored on the memory and executable by the processor. When the computer programs are executed by the processor, the following two aspects are implemented.

One aspect, a first parameter is obtained when in an idle state, and a TRS sequence and/or a CSI-RS sequence is monitored based on the first parameter; and

The other aspect, the first parameter is sent, in which the first parameter is configured for a UE to monitor the TRS sequence and/or the CSI-RS sequence.

The embodiments of the disclosure also provide a computer-readable storage medium having computer programs stored thereon. When the computer programs are executed by a processor, the method shown in the above embodiments is implemented. Therefore, the UE can obtain the first parameter used for monitoring the TRS sequence and/or the CSI-RS sequence in the idle state, so that the TRS sequence and/or the CSI-RS sequence is monitored based on the obtained first parameter, and then it is determined whether to monitor the paging DCI in the PO and its corresponding PDSCH based on the monitoring result of the TRS sequence and/or the CSI-RS sequence.

The computer-readable storage medium provided by the embodiment of the disclosure is suitable for any of the above method embodiments.

It should be understood that although steps in the flowchart of the accompanying drawings are shown sequentially as indicated by the arrows, the steps are not necessarily performed sequentially in the order indicated by the arrows. Unless explicitly stated in the disclosure, there is no strict sequential limitation on the execution of these steps, which may be performed in other orders. In addition, at least some of the steps in the flowchart of the accompanying drawings may include a plurality of sub-steps or a plurality of phases, which are not necessarily executed at the same time, and may be executed at different times. The execution order is not necessarily sequential, and the steps can be performed in turn or alternatively with other steps or at least part of sub-steps or phases of other steps.

The above describes only part of the implementations of the disclosure, and it should be noted that for those skilled in the art, improvements and modifications can be made without departing from the principles of the disclosure, and the improvements and modifications should also be considered within the protection scope of the disclosure.

**Claims**

1. A communication method, comprising:

   obtaining a first parameter in response to being in an idle state; and
   monitoring a Tracking Reference Signal (TRS) sequence and/or a Channel State Information Reference Signal (CSI-RS) sequence based on the first parameter.

2. The method of claim 1, wherein obtaining the first parameter in response to being in an idle state comprises at least one of:

   obtaining a preset first parameter;
   receiving the first parameter sent by a base station; or
   determining the first parameter based on a second parameter and an association relation between the first parameter and the second parameter, wherein the second parameter is a parameter related to a Paging Occasion (PO) monitored by a User Equipment (UE).

3. The method of claim 2, wherein the parameter related to the PO monitored by the UE comprises at least one of:

   a physical layer cell identifier of a cell of the PO monitored by the UE;
   an index of a radio frame of the PO monitored by the UE;

an index of a time slot of the PO monitored by the UE;
an index of a start symbol of the PO monitored by the UE; or,
an index of a Synchronization Signal Block (SSB) corresponding to the PO monitored by the UE.

4. The method of claim 2, wherein receiving the first parameter sent by the base station comprises:

receiving system information sent by the base station, wherein the system information comprises the first parameter;
wherein the system information comprises a Master Information Block (MIB) or a System Information Block (SIB).

5. The method of claim 1, wherein monitoring the TRS sequence and/or the CSI-RS sequence based on the first parameter comprises at least one of:

monitoring the TRS sequence and/or the CSI-RS sequence based on the first parameter in response to being in the idle state; or
monitoring the TRS sequence and/or the CSI-RS sequence based on the first parameter in response to being in a connected state.

6. The method of any one of claims 1-5, wherein the first parameter is an integer ranging from 0 to 1023.

7. The method of any one of claims 1-5, wherein the first parameter is a scrambling identifier for generating the TRS sequence and/or the CSI-RS sequence.

8. A communication method, comprising:
sending a first parameter, wherein the first parameter is configured for a UE to monitor a TRS sequence and/or a CSI-RS sequence.

9. The method of claim 8, wherein sending the first parameter comprises:

sending system information, wherein the system information comprises the first parameter;
wherein the system information comprises a MIB or a SIB.

10. The method of claim 8 or claim 9, wherein the first parameter is an integer ranging from 0 to 1023.

11. The method of claim 8 or claim 9, wherein the first parameter is a scrambling identifier for generating the TRS sequence and/or the CSI-RS sequence.

12. A user equipment (UE), comprising:

an obtaining module, configured to obtain a first parameter in response to being in an idle state; and
a monitoring module, configured to monitor a TRS sequence and/or a CSI-RS sequence based on the first parameter.

13. The user equipment of claim 12, wherein the obtaining module is configured to perform at least one of:

obtaining a preset first parameter;
receiving the first parameter sent by a base station; or
determining the first parameter based on a second parameter and an association relation between the first parameter and the second parameter, wherein the second parameter is a parameter related to a PO monitored by the UE.

14. The user equipment of claim 13, wherein the parameter related to the PO monitored by the UE comprises at least one of:

a physical layer cell identifier of a cell of the PO monitored by the UE;
an index of a radio frame of the PO monitored by the UE;
an index of a time slot of the PO monitored by the UE;
an index of a start symbol of the PO monitored by the UE; or,

an index of a Synchronization Signal Block (SSB) corresponding to the PO monitored by the UE.

15. The user equipment of claim 13, wherein when receiving the first parameter sent by a base station, the obtaining module is configured to:

receive system information sent by the base station, wherein the system information comprises the first parameter;
wherein the system information comprises a MIB or a SIB.

16. The user equipment of claim 12, wherein the monitoring module is configured to perform at least one of:

monitoring the TRS sequence and/or the CSI-RS sequence based on the first parameter in response to being in the idle state; or
monitoring the TRS sequence and/or the CSI-RS sequence based on the first parameter in response to being in a connected state.

17. The method of any one of claims 12-16, wherein the first parameter is an integer ranging from 0 to 1023.

18. The method of any one of claims 12-16, wherein the first parameter is a scrambling identifier for generating the TRS sequence and/or the CSI-RS sequence.

19. A base station, comprising:
a sending module, configured to send a first parameter, wherein the first parameter is configured for a UE to monitor a TRS sequence and/or a CSI-RS sequence.

20. The base station of claim 19, wherein, when sending the first parameter, the sending module is configured to:

send system information, wherein the system information comprises the first parameter;
wherein the system information comprises a MIB or a SIB.

21. The base station of claim 19 or claim 20, wherein the first parameter is an integer ranging from 0 to 1023.

22. The base station of claim 19 or claim 20, wherein the first parameter is a scrambling identifier for generating the TRS sequence and/or the CSI-RS sequence.

23. An electronic device comprising a memory, a processor and computer programs stored on the memory and executable by the processor, wherein when the computer programs are executed by the processor, the method of any one of claims 1-11 is implemented.

24. A computer readable storage medium having computer programs stored thereon, wherein when the computer programs are executed by a processor, the method of any one of claims 1-11 is implemented.

FIG. 1

obtaining a first parameter in response to being in an idle state $\quad$ S210

monitoring a TRS sequence and/or a CSI-RS sequence based on the first parameter $\quad$ S220

FIG. 2

sending a first parameter, in which the first parameter is configured for a UE to monitor a TRS sequence and/or a CSI-RS sequence

S310

FIG. 3

| 401 | 402 |
|---|---|
| Obtaining module | Monitoring module |

User equipment

400

FIG. 4

501

Sending module

Base station

500

FIG. 5

602

Processor

601

Application code

603

Memory

Transceiver

604

Electronic device

600

FIG. 6

## INTERNATIONAL SEARCH REPORT

| | International application No. |
|---|---|
| | **PCT/CN2020/103106** |

**A. CLASSIFICATION OF SUBJECT MATTER**

H04W 24/08(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 监听, 接收, 捕获, 信道状态信息参考, 跟踪参考信号, 追踪参考信号, 追踪导频, 跟踪导频, 整数, 参数, 连接, 空闲, 非连接, 未激活, 非激活, 扰码, 标识, receive, acquire , listen, monitor, capture, scramble, integral, TRS, tracking reference signal, ID, identity, parameter, CSI-RS, integer, free, idle, disconnected

**C. DOCUMENTS CONSIDERED TO BE RELEVANT**

| Category* | Citation of document, with indication, where appropriate, of the relevant passages | Relevant to claim No. |
|---|---|---|
| X | CN 110913422 A (HUAWEI TECHNOLOGIES CO., LTD.) 24 March 2020 (2020-03-24) description, paragraphs [0081]-[0225], and figures 3-15 | 1-24 |
| X | CN 110035447 A (VIVO COMMUNICATION TECHNOLOGY CO., LTD.) 19 July 2019 (2019-07-19) description, paragraphs [0025]-[0114], and figures 1-7 | 1-24 |
| A | CN 104852786 A (CHINA MOBILE COMMUNICATIONS GROUP CO., LTD.) 19 August 2015 (2015-08-19) entire document | 1-24 |
| A | CN 106411485 A (ZTE CORPORATION) 15 February 2017 (2017-02-15) entire document | 1-24 |
| A | US 2020037354 A1 (SAMSUNG ELECTRONICS CO., LTD.) 30 January 2020 (2020-01-30) entire document | 1-24 |
| A | US 2019200250 A1 (TELEFONAKTIEBOLAGET LM ERICSSON (PUBL)) 27 June 2019 (2019-06-27) entire document | 1-24 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 March 2021** | **22 April 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| PCT/CN2020/103106 |

| Patent document cited in search report | | | Publication date (day/month/year) | Patent family member(s) | | | Publication date (day/month/year) |
|---|---|---|---|---|---|---|---|
| CN | 110913422 | A | 24 March 2020 | WO | 2020057518 | A1 | 26 March 2020 |
| CN | 110035447 | A | 19 July 2019 | | None | | |
| CN | 104852786 | A | 19 August 2015 | WO | 2015124029 | A1 | 27 August 2015 |
| | | | | CN | 104852786 | B | 10 August 2018 |
| CN | 106411485 | A | 15 February 2017 | WO | 2017016325 | A1 | 02 February 2017 |
| US | 2020037354 | A1 | 30 January 2020 | WO | 2020027533 | | 06 February 2020 |
| US | 2019200250 | A1 | 27 June 2019 | EP | 3729670 | A4 | 18 November 2020 |
| | | | | US | 10750393 | B2 | 18 August 2020 |
| | | | | EP | 3729670 | A1 | 28 October 2020 |
| | | | | WO | 2019125261 | A1 | 27 June 2019 |

Form PCT/ISA/210 (patent family annex) (January 2015)